# EUROPÄISCHE PATENTSCHRIFT

(11) **EP 0 751 032 B1**
(45) Veröffentlichungstag und Bekanntmachung des Hinweises auf die Patenterteilung: **31.01.2001**
(21) Anmeldenummer: 96110128.4
(22) Anmeldetag: 21.06.1994
(51) Int. Cl.: B60N 2/22, B60N 2/44

(54) **Verstellvorrichtung**
Adjusting device
Dispositif de réglage

(30) Priorität: 26.06.1993 DE 4321335
(43) Veröffentlichungstag der Anmeldung: 02.01.1997
(62) Teilanmeldung aus: 94109567.1
(73) Patentinhaber: BURGER SÖHNE GmbH + Co., D-71065 Sindelfingen (DE)
(72) Erfinder: Helbig, Thorsten, Dipl.-Ing., D-70199 Stuttgart (DE); Schmidt, Bernd, Dipl.-Ing., D-75391 Gechingen (DE); Klink, Josef, Dipl.-Ing., D-72202 Nagold (DE); Dinkel, Emil, D-71272 Renningen (DE); Speck, Volker, D-71065 Sindelfingen (DE); Schneider, Fritz, D-74706 Osterburken (DE)
(74) Vertreter: Lasch, Hartmut Dipl.-Ing.

(56) Entgegenhaltungen:
- EP-A- 0 370 502
- EP-A- 0 497 007
- WO-A-93/08410
- DE-A- 1 925 778
- DE-A- 2 323 640
- DE-A- 2 526 149
- DE-A- 3 734 363
- DE-B- 1 106 138

## Beschreibung

Die Erfindung betrifft eine Verstellvorrichtung zur Durchführung mindestens einer Verstellfunktion, insbesondere zur Verstellung eines Kraftfahrzeugsitzes, gemäß dem Oberbegriff des Patentanspruchs 1.

Bei einer bekannten Verstellvorrichtung zum Verstellen eines Kraftfahrzeugsitzes (DE 37 34 363 C2) weist das Getriebe zur Realisierung von Freilauf und Hemmung eine zweigeteilte Welle auf, bei welcher das äußere Ende des abtriebseitigen Wellenteils als ein mit einer Zahnstange kämmendes Triebrad ausgebildet ist und das äußere Ende des antriebsseitigen Wellenteils mit einem die Betätigungeinheit bildenden Handstellrad fest verbunden ist. Die beiden anderen Enden der Wellenteile sind als miteinander verklemmbare Kupplungsscheiben ausgebildet. Die mit dem abtriebsseitigen Wellenteil einstückige Kupplungsscheibe ist dabei unter Belassung eines Ringspalts in einem feststehenden Gehäuse mit kreisförmiger Innenwand aufgenommen und die mit dem antriebsseitigen Wellenteil verbundene Kupplungsscheibe greift mit axialen, stiftartigen Mitnehmern in den Ringspalt zwischen abtriebsartiger Kupplungsscheibe und Gehäuse ein. Die im Gehäuse einliegende abtriebsartige Kupplungsscheibe trägt am Umfang gleichmäßig zueinander versetzt angeordnete Radialvorsprünge und unmittelbar an den in Umfangsrichtung weisenden Stirnseiten der Radialvorsprünge eingeformte Mulden, in welchen jeweils walzenförmige Klemmkörper einliegen, die sich am Muldengrund und an der kreisförmigen Innenwand des Gehäuses abrollen. Die Klemmkörper werden von Druckfedern an die von den Radialvorsprüngen abgekehrten Flanken ihrer Mulden angepreßt und verkeilen so bei Drehung der abtriebsseitigen Kupplungsscheibe diese im Gehäuse. Bei Kraftfluß von dem abtriebsseitigen Wellenteil zu dem antriebsseitigen Wellenteil sperrt also das Getriebe. Wird hingegen das Handrad gedreht, so verschieben die Mitnehmer an der antriebsseitigen Kupplungsscheibe die Klemmkörper aus der Klemmstellung und legen sie an Stirnflächen der Radialvorsprünge an, so daß die abtriebsseitige Kupplungsscheibe mit der antriebsseitigen Kupplungsscheibe mitdreht. Bei Kraftfluß vom antriebsseitigen Wellenteil zu dem abtriebsseitigen Wellenteil hat das Getriebe also Freilauf und überträgt die Drehung des Handrades in dem einen oder anderen Drehsinn auf das abtriebsseitige Triebrad, das eine entsprechende Verstellung am Kraftfahrzeugsitz durchführt.

Bei dieser bekannten Verstellvorrichtung erfolgt durch Drehen des Handrades eine stufenlose Verstellung des Kraftfahrzeugsitzes, wobei die jeweils gewünschte Einstellung des Kraftfahrzeugsitzes durch das Getriebe chrashsicher arretiert wird. Allerdings ist die Zugänglichkeit des Handrades nach Platznehmen des Sitzbenutzers auf dem Sitz in den weitaus meisten Fällen wenig günstig und das Drehen des Handrades in dieser Position, insbesondere bei großen Verstellbewegungen am Kraftfahrzeugsitz, recht mühsam, so daß häufig die Sitzeinstellung nach Aussteigen von außen durch die geöffnete Kraftfahrzeugtür durchgeführt wird. Darüber hinaus ist nicht gewährleistet, daß sich die Verstellvorrichtung durch Schwingungen auf einer schlechten Wegstrecke nicht verstellt.

Eine entsprechende Verstellvorrichtung ist auch in der DE-A-2323640 gezeigt.

Der Erfindung liegt die Aufgabe zugrunde, bei einer Verstellvorrichtung der eingangs genannten Art, insbesondere für Kraftfahrzeugsitze, die Sicherheit gegen unbeabsichtigte Verstellungen wesentlich zu erhöhen.

Die Aufgabe ist bei einer Verstellvorrichtung der im Oberbegriff des Patentanspruchs 1 definierten Gattung erfindungsgemäß durch die Merkmale im Kennzeichenteil des Patentanspruchs 1 gelöst.

Vorteilhafte Ausführungsformen der erfindungsgemäßen Verstellvorrichtung mit zweckmäßigen Weiterbildungen und Ausgestaltungen der Erfindung sind in den weiteren Patentansprüchen angegeben.

Zwecks zuverlässiger Sicherung der vorgenommenen Einstellung auch auf schlechten Wegstrecken oder im Crashfall wird gemäß der Erfindung das Getriebe mit Hemmung und Freilauf dadurch realisiert, daß eine mit einem Verstellorgan drehfest verbundene abtriebsseitige Innenwelle und ein feststehendes Gehäuse vorgesehen ist, das mit einer zylindrischen Gehäuseinnenwand die Innenwelle unter Belassung eines Ringspalts zu deren Außenmantel konzentrisch umschließt. Die Innenwelle trägt um vorzugsweise gleiche Umfangswinkel zueinander versetzt angeordnete, in den Ringspalt hineinragende Radialvorsprünge und im Außenmantel eine doppelte Anzahl von Vertiefungen, die in Umfangsrichtung gesehen auf einer Seite jeweils von einer Radialschulter der Radialvorsprünge begrenzt werden und deren Tiefe zu der von den Radialschultern abgekehrten Seite hin abnimmt. In den Vertiefungen liegt jeweils ein Klemmkörper ein, der am Boden der Vertiefung und an der Gehäuseinnenfläche anliegt und mittels eines federelastischen Elements zu der von der Radialschulter abgekehrten Seite der Vertiefung hin verschoben wird. In den Ringspalt ragt eine der Anzahl der Radialvorsprünge entsprechende Zahl von antriebsseitigen axialen Mitnehmern hinein, die jeweils zwischen zwei einander benachbarten Klemmkörpern so plaziert sind, daß sie in Umfangsrichtung einen nur geringen Abstand zu jedem Klemmkörper einhalten. Bei dieser Ausführung des Getriebes kann ein auf die Innenwelle eingeleiteter Bewegungsimpuls, z.B. durch Crash, nicht ausgeführt werden, da dies zu einem weiteren Verkeilen der Klemmkörper zwischen Gehäuse und Innenwelle führt. Zum Ausführen einer Verstellbewegung werden durch die Mitnehmer die Klemmkörper aus der Sperrposition bis zur Anlage an den Radialvorsprüngen der Innenwelle geschoben, und anschließend wird die Innenwelle über den gewünschten Weg mitbewegt. Wird keine Verstellbewegung der Mitnehmer ausgeführt, sind Gehäuse und Innenwelle immer zueinander arretiert.

Gemäß der Erfindung ist die Gehäuseinnenwand mit einer flachen, feinstufigen Innenverzahnung versehen und die Klemmkörper als Prismen, insbesondere Fünffachprismen und die Vertiefungen als asymmetrische, im Querschnitt etwa sägezahnförmige Längsnuten ausgebildet, deren größte Tiefe am Fuße der Radialschultern der Radialvorsprünge liegt. Die Innenverzahnung an der Gehäuseinnenwand und die dieser zugekehrten Prismenfläche der vorzugsweise auf dem Nutgrund der Längsnuten in Umfangsrichtung verschiebbaren Fünfeckprismen sind so aufeinander abgestimmt, daß die Fünfeckprismen von ihren federelastischen Elementen formschlüssig in die Innenverzahnung eingeschoben werden. Durch diesen Formschluß wird ein selbständiges Verstellen der Verstellvorrichtung, z.B. durch Schwingungen auf einer schlechten Wegstrecke, absolut ausgeschlossen. Das Verstellen und Verriegeln erfolgt nicht mehr vollkommen stufenlos sondern in feinstufigen Schritten, wodurch ein besserer Formschluß und ein sicheres Verkeilen erzielt wird.

Das stufenlose Schrittschaltwerk mit Handschwenkhebel erleichtert wesentlich die Durchführung der Verstellfunktionen. Der Handschwenkhebel braucht nur in die eine oder andere Richtung geschwenkt zu werden, wodurch der Antrieb um den Schwenkweg des Schwenkhebels gedreht wird. Nach Freigeben des Schwenkhebels wird dieser automatisch in seine Nullage zurückgeführt. Bei wiederholter Schwenkung des Schwenkhebels bis zu einem durch das Schrittschaltwerk vorgegebenen maximalen Schwenkwinkel können größere Verstellbewegungen herbeigeführt werden. Eine Feineinstellung ist durch Schwenken des Schwenkhebels um einen beliebig kleinen Schwenkwinkel innerhalb seines maximalen Schwenkwegs möglich. Durch symmetrische Auslegung des Schrittschaltwerks ist der Verstellvorgang in beiden Schwenk- oder Drehrichtungen möglich.

Das Schrittschaltwerk läßt sich in besonders vorteilhafter Weise realisieren, wenn ein mit dem Antrieb drehfest verbundenes Innenteil mit zylindrischer Außenfläche und ein mit dem Schwenkwinkel drehfest koppelbares Außenteil zylindrischer, das Innenteil unter Belassung eines Ringspalts zu dessen Außenfläche konzentrisch umschließender Innenfläche vorgesehen wird. In dem Ringspalt sind mindestens zwei räumlich feststehende Anschläge um vorzugsweise gleiche Umfangswinkel zueinander versetzt angeordnet und liegen Klemmkörper ein, die sich einerseits an den beiden Zylinderflächen von Innen- und Außenteil abrollen und sich andererseits unter Federkraft jeweils paarweise an voneinander in Umfangsrichtung abgekehrten Seiten der Anschläge abstützen. An einer der Zylinderflächen von Innen-und Außenteil ist eine der Anzahl der Anschläge entsprechende Zahl von in den Ringspalt radial vorspringenden Axialrippen mit bogenförmigen Flanken ausgebildet, die um gleiche Umfangswinkel wie die Anschläge zueinander versetzt so angeordnet sind, daß sie in der Grundstellung des Schwenkhebels den Anschlägen radial gegenüberstehen. Beim Betätigen des Schwenkhebels wird mit diesem das Außenteil aus der Nullage bewegt, und bereits nach kurzem Schwenkweg führen die Axialrippen über die Klemmkörper zum Verspannen des Außenteils mit dem Innenteil. Das Innenteil wird mitbewegt und führt die gewünschte Verstellbewegung aus. Wird der Schwenkhebel freigegeben, so schieben die an den Klemmkörpern angreifenden Federkräfte diese wieder unter Mitnahme des Außenteils und damit des Schwenkhebels an die Anschläge zurück. Das Schrittschaltwerk mit Schwenkhebel nimmt wieder seine Nullage ein.

Wenn gemäß einer vorteilhaften Ausführungsform mehr als ein jeweils einem Getriebe zugeordnetes Schrittschaltwerk vorgesehen und der Handhebel wahlweise mit einem der Schrittschaltwerke oder mit beiden Schrittschaltwerken gleichzeitig koppelbar ausgebildet wird, so läßt sich mit einem einzigen Handschwenkhebel eine Mehrzahl von Verstellfunktionen realisieren. So lassen sich z.B. an einem Kraftfahrzeugsitz mit einem einzigen Handschwenkhebel sowohl die Höhenverstellung des Sitzkissens als auch die Neigungswinkelverstellung der Rückenlehne oder die Kopfstützeneinstellung ausführen.

Die wahlweise Kopplung von Handschwenkhebel und Schrittschaltwerk läßt sich in verschiedener Weise realisieren. In einer bevorzugten Ausführungsform ist der Handschwenkhebel koaxial zum Innen- und Außenteil der Schrittschaltwerke schwenkbar gelagert und weist mindestens eine der Anzahl der Schrittschaltwerke entsprechende Zahl von axial abstehenden Mitnehmerstiften auf, die wahlweise in eine axiale Aufnahme in dem Außenteil des jeweils einem Mitnehmerstift zugeordneten Schrittschaltwerks zu dessen Drehmitnahme formschlüssig einschiebbar sind. Dabei kann der Handschwenkhebel seitlich der Schrittschaltwerke oder zwischen zwei Schrittschaltwerken angeordnet werden.

Im ersten Fall sind nach einer vorteilhaften Ausführungsform die Mitnehmerstifte im Schwenkhebel axial verschieblich ausgebildet, und an jedem Mitnehmerstift greift ein diesen in Außereingriff mit dem Außenteil des zugeordneten Schrittschaltwerks haltendes elastisches Rückstellglied an. Ein manuell zu bedienendes Verriegelungsglied ist wahlweise mit einem der Mitnehmer zu dessen Verriegelung in seiner Eingriffstellung im Außenteil des zugeordneten Schrittschaltwerks in Eingriff bringbar.

Im zweiten Fall der Anordnung des Schwenkhebels zwischen zwei Schrittschaltwerken ist der Schwenkhebel selbst axial verschieblich angeordnet und trägt auf jeder seiner voneinander abgekehrten Stirnseiten mindestens einen feststehenden, axial vorspringenden Mitnehmerstift. Durch axiale Verschiebung des Schwenkhebels in die eine oder andere Richtung werden die Mitnehmerstifte in die mindestens eine axiale Aufnahme im Außenteil des einen oder anderen Schrittschaltwerkes eingeschoben.

Alternativ kann die wahlweise Kopplung des Handschwenkhebels mit den Schrittschaltwerken gemäß einer weiteren Ausführungsform dadurch herbeigeführt werden, daß die Außenteile zweier nebeneinander angeordneter Schrittschaltwerke in kongruenter Ausrichtung über einen Zwischenring mit rein zylindrischer Innenfläche miteinander zu einer axial verschieblichen Schaltbuchse verbunden sind. Die Schaltbuchse ist drehfest mit dem Handschwenkhebel verbunden. Bei Axialverschiebung der Schaltbuchse in die eine oder andere Richtung übergreift der Zwischenring die Klemmkörper in dem einen oder anderen Schrittschaltwerk zur Herstellung eines Freilaufs, während im anderen Schrittschaltwerk die Schaltbuchse über die Klemmkörper mit dem Innenteil verkeilt wird.

Die Erfindung ist anhand von in der Zeichnung dargestellten Ausführungsbeispielen im folgenden näher beschrieben. Dabei zeigen:
- Fig. 1: eine Seitenansicht eines Fahrzeugsitzes für einen Personenkraftwagen mit Verstellvorrichtungen zur Sitzeinstellung,
- Fig. 2: ausschnittweise eine Draufsicht einer Betätigungseinheit in einer Verstellvorrichtung zur Sitzverstellung,
- Fig. 3 und 4: jeweils eine gleiche Darstellung wie in Fig. 2 in zwei gegensinnigen Schwenkstellungen der Betätigungseinheit,
- Fig. 5: ausschnittweise eine Draufsicht einer Betätigungseinheit in einer Verstellvorrichtung zum Ausführen zweier verschiedener Sitzverstellungen,
- Fig. 6: eine Seitenansicht der Betätigungseinheit in Richtung Pfeil VI in Fig. 5,
- Fig. 7 und 8: jeweils eine gleiche Darstellung wie in Fig. 5 und 6 gemäß einem zweiten Ausführungsbeispiel der Betätigungseinheit,
- Fig. 9 und 10: jeweils eine gleiche Darstellung wie in Fig. 5 und 6 gemäß einem dritten Ausführungsbeispiel der Betätigungseinheit,
- Fig. 11: eine gleiche Darstellung wie in Fig. 5 gemäß einem vierten Ausführungsbeispiel der Betätigungseinheit,
- Fig. 12: einen Schnitt längs der Linie XII-XII in Fig. 11,
- Fig.13 und 14: jeweils eine Draufsicht eines Getriebes in einer der Verstellvorrichtungen in Fig. 1 zur Sitzeinstellung gemäß verschiedener Ausführungsbeispiele.

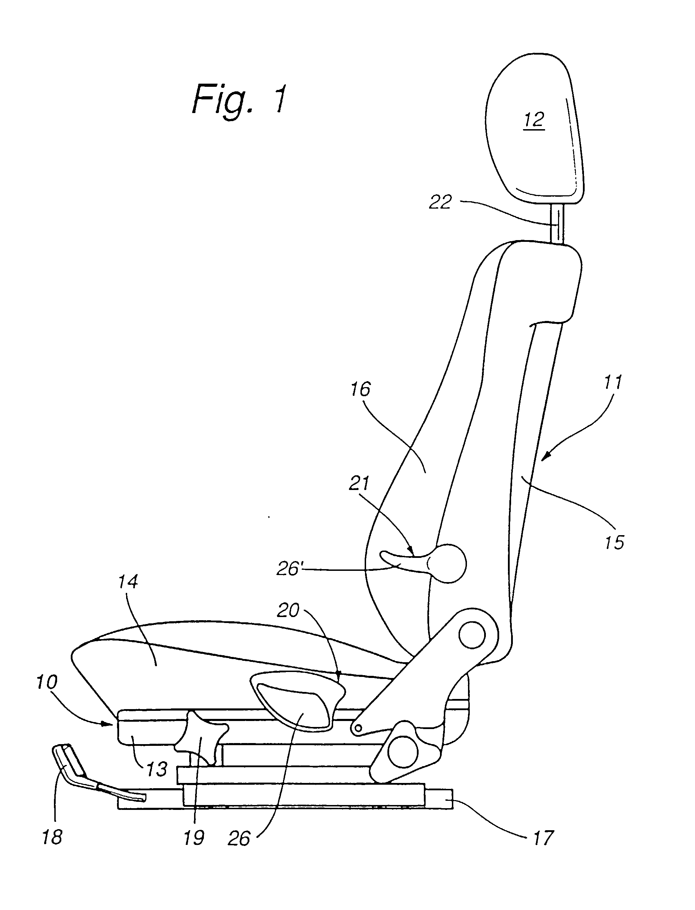

Der in Fig. 1 in Seitenansicht dargestellte Fahrzeugsitz für einen Personenkraftwagen weist in bekannter Weise ein Sitzteil 10, eine Rückenlehne 11, deren Neigung relativ zum Sitzteil 10 einstellbar ist, und eine an der Rückenlehne 11 gehaltene Kopfstütze 12 auf. Das Sitzteil 10 besteht aus einem Sitzrahmen 13 mit darauf befestigtem Sitzkissen 14. Am Sitzrahmen 13 ist der Lehnenrahmen 15 der Rückenlehne 11 mit darauf befestigtem Lehnenpolster 16 um eine quer zur Fahrzeuglängsachse verlaufende Schwenkachse schwenkbar gehalten. Der Sitzrahmen 13 ist in am Fahrzeugboden befestigten Halteschienen 17 gehalten und in Fahrzeugslängsrichtung verschiebbar. Am Fahrzeugsitz sind mehrere Verstellvorrichtungen vorgesehen, mittels welcher verschiedene Einstellfunktionen am Fahrzeugsitz durchführbar sind. Mit dem Arretierhebel 18 ist eine Verriegelung zwischen Sitzrahmen 13 und Halteschiene 17 zur Längsverschiebung des Sitzrahmens 13 lösbar und nach Sitzeinstellung wieder herstellbar. Mittels des Handrades 19 läßt sich die Vorderkante des Sitzteils 10 anheben und absenken, so daß das Sitzkissen in seiner Neigung einstellbar ist. Mit der Verstellvorrichtung 20 ist das Sitzteil 10 in seiner Höhenposition und ggf. hinsichtlich seiner Sitztiefe einstellbar, und mit der Verstellvorrichtung 21 ist die Neigung der Rückenlehne 11 relativ zum Sitzteil 10 und zusätzlich die Höhe der Kopfstütze 12 einstellbar. Hierzu ist die Kopfstütze 12 an mindestens einer Führungsstange 22 befestigt, die im Lehnenrahmen 15 axial verschieblich geführt ist.

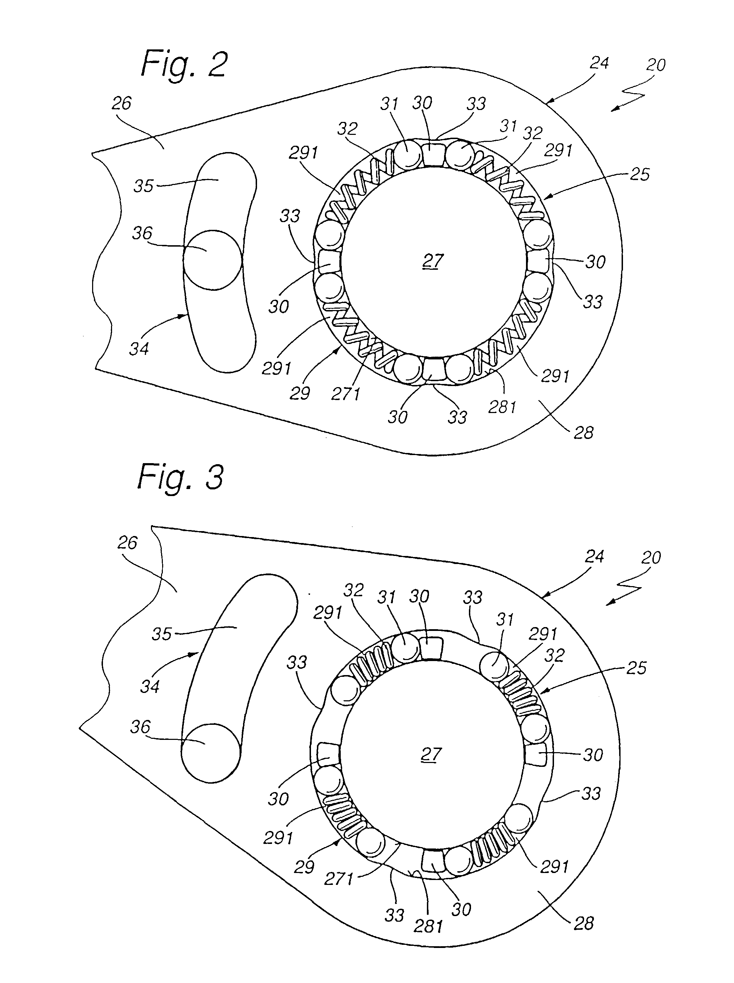

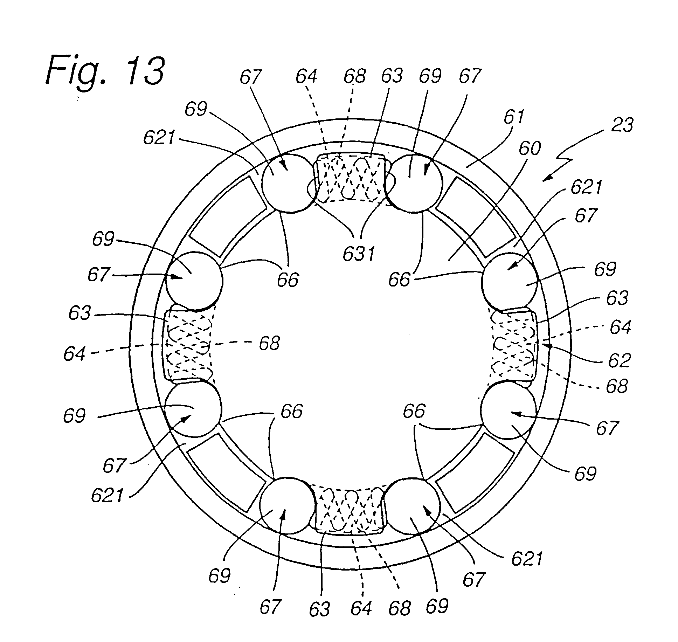

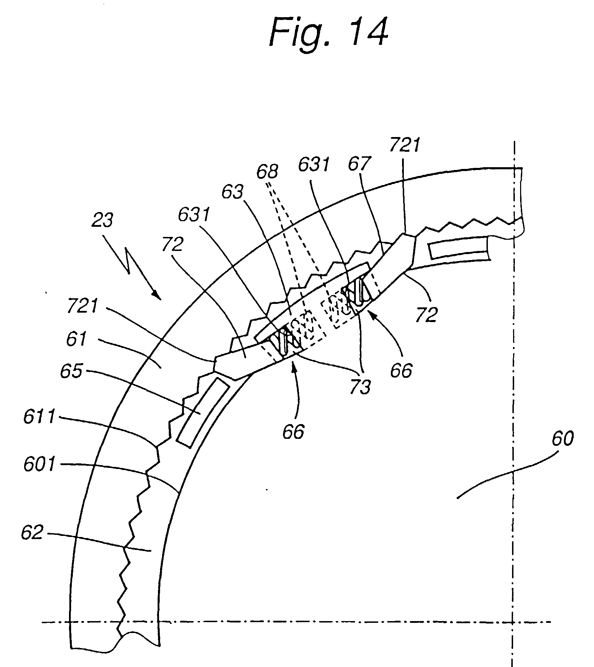

Die Verstellvorrichtung 20 weist ein Getriebe zur Übertragung einer antriebsseitigen Drehbewegung in eine abtriebsseitige Verstellbewegung auf, das mit Freilauf und Hemmung derart ausgestattet ist, daß bei Kraftfluß vom Antrieb zum Abtrieb das Getriebe in entgegengesetzten Drehrichtungen frei drehbar ist und bei Umkehrung des Kraftflusses sperrt. Der Antrieb ist mit einer Betätigungseinheit 24 (Fig. 2 - 4) gekoppelt, die am Antrieb eine Drehbewegung entsprechend einer an ihr vorgenommenen Handbetätigung durchführt. Das Getriebe sorgt für eine stufenlose oder feinstufige Einstellung des Sitzteils 10 in der Höhe und arretiert gleichzeitig das Sitzteil 10 in der eingestellten Höhenposition zuverlässig, so daß die eingestellte Position weder durch Schwingungen auf schlechten Wegstrecken noch bei Crash sich selbsttätig verändert. Ausführungsbeispiele des Getriebes 23 sind in Fig. 13 und 14 dargestellt, auf die noch später im einzelnen eingegangen wird.

Die Betätigungseinheit 24 weist ein mit dem Antrieb des Getriebes 23 verbundenes Schrittschaltwerk 25 und einen manuell zu bedienenden Schwenkhebel 26 zum wiederholbaren Auslösen eines Schaltschrittes des Schrittschaltwerks 25 auf. Mit jedem Schaltschritt wird der Antrieb um einen maximalen Drehweg gedreht. Innerhalb des maximalen Schaltschrittes kann der Antrieb stufenlos um jeden möglichen Drehwinkel gedreht werden. Die Betätigungseinheit 24, von welcher in Fig. 1 nur der Handschwenkhebel 26 zu sehen, ist in Fig. 2 - 4 im einzelnen ausschnittweise dargestellt. Das stufenlose Schrittschaltwerk 25 weist ein mit dem Antrieb des Getriebes 23 drehfest verbundenes Innenteil 27 mit zylindrischer Außenfläche 271 und ein mit dem Schwenkhebel 26 drehfestes Außenteil 28 mit zylindrischer Innenfläche 281 auf. Das Außenteil 28 ist hier einstückig mit dem Schwenkhebel 26 ausgebildet. Seine Innenfläche 281 umschließt konzentrisch das Innenteil 27, wobei zwischen der Außenfläche 271 des Innenteils 27 und der Innenfläche 281 des Außenteils 28 ein Ringraum 29 verbleibt. In dem Ringraum 29 sind vier um jeweils 90° Umfangswinkel zueinander versetzt angeordnete Anschläge 30 räumlich feststehend angeordnet. Weiterhin liegen im Ringraum 29 Klemmkörper 31 ein, die hier als Rollen oder Walzen oder als Kugeln ausgebildet sind. In dem Ringraumabschnitt 291 zwischen jeweils zwei Anschlägen 30 sind immer zwei Klemmkörper 31 angeordnet, die von einer ebenfalls im Ringraumabschnitt 291 einliegenden, sich in Umfangsrichtung erstreckenden Druckfeder 32 gegen die einander zugekehrten Stirnflächen der Anschläge 301 gedrückt werden. Durch die insgesamt vier vorhandenen Anschläge 30 ist der Ringraum 29 somit in vier Ringraumabschnitte 291 unterteilt, in denen in der beschriebenen Weise ingesamt acht Klemmkörper 31 einliegen, die von insgesamt vier Druckfedern 32 gegen Stirnflächen der vier Anschläge 30 gepreßt werden. Die Klemmkörper 31 rollen sich auf der Außenfläche 271 des Innenteils 27 und auf der Innenfläche 281 des Außenteils 28 ab, so daß der mit dem Außenteil 28 einstückige Schwenkhebel 26 auf dem Innenteil 27 drehbar gelagert ist. Die Innenfläche 281 des Außenteils 28 trägt insgesamt vier Axialrippen 33, die sich leicht bogenförmig von der Innenfläche 281 in den Ringraum 29 hinein vorwölben und dadurch eine Verengung des Ringraumquerschnittes erzeugen. Die vier Axialrippen 33 sind um 90° Umfangswinkel zueinander versetzt derart angeordnet, daß sie in der in Fig. 2 gezeigten Nullage oder Grundstellung des Schwenkhebels 26 den Anschlägen 30 radial gegenüberliegen. Alternativ hierzu ist es möglich, die Axialrippen 33 auch an der Außenfläche 271 des Innenteils 27 anzuordnen. Selbstverständlich kann auch die Anzahl der Anschläge 30 und damit die Zahl der Klemmkörper 31 und Druckfedern 32 variiert werden. Die Anzahl der Axialrippen 33 ist aber immer gleich der der Anschläge 30.

Die beschriebene Betätigungseinheit 24 arbeitet wie folgt:

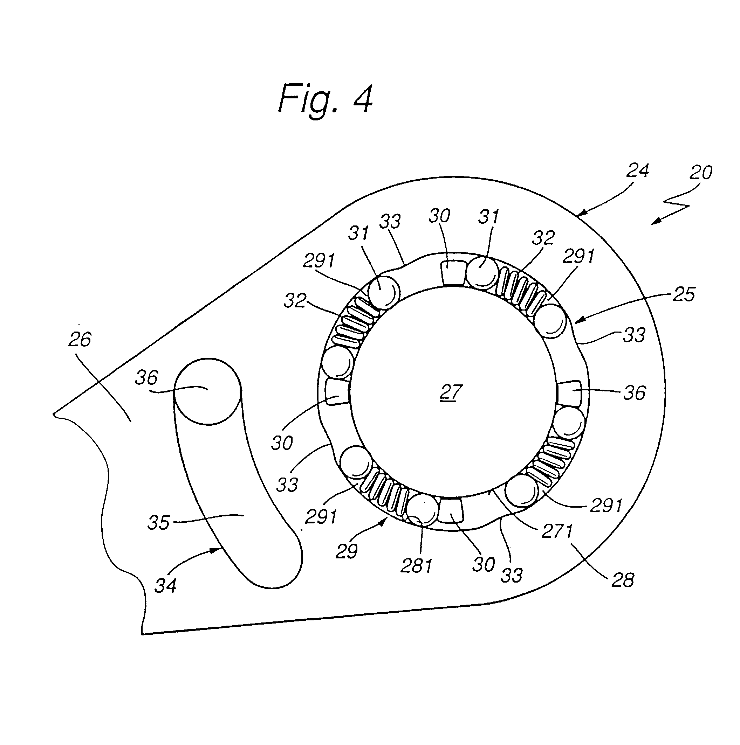

Soll die Position des Sitzteils 10 in Vertikalrichtung nach oben oder unten verstellt werden, so ist der Handschwenkhebel 26 in der Zeichnung im Uhrzeigersinn (Fig. 3) bzw. entgegen Uhrzeigersinn (Fig. 4) zu schwenken, je nachdem, ob das Sitzteil 10 nach oben bewegt oder abgesenkt werden soll. Bereits nach kurzem Schwenkweg des Schwenkhebels 26 und damit des Außenteils 28 führen die Axialrippen 33 über die Klemmkörper 31 zu einem Verspannen des Außenteils 28 mit dem Innenteil 27. Letzteres wird mitbewegt und verdreht den Antrieb des Getriebes 23, dessen Abtrieb seinerseits eine Verstellbewegung des Sitzteils 10 in die gewünschte Richtung durchführt. Der maximale Schwenkweg des Schwenkhebels 26 ist erreicht, wenn die Druckfedern 32 auf Blocklänge gestaucht sind. Wird nunmehr der Schwenkhebel 26 freigegeben oder rückgeführt, so bewirken die Druckfedern 32 das selbsttätige Einstellen der Nullage des Schwenkhebels 26. In Fig. 3 sind Schwenkhebel 26 und Schrittschaltwerk 25 in ihrer maximalen Schwenkstellung im Uhrzeigersinn und in Fig. 4 in ihrer maximalen Schwenkstellung entgegen Uhrzeigersinn dargestellt. In Fig. 2 nehmen Schrittschaltwerk 25 und Schwenkhebel 26 ihre Nullage ein. Ist die bei einer Schwenkhebelbetätigung erfolgte Einstellung der Sitzhöhe nicht ausreichend, so kann diese durch erneutes Betätigen des Schwenkhebels 26 weiter verändert werden. Innerhalb des maximalen Schwenkweges des Schwenkhebels 26 kann das Innenteil 27 und mit diesem der Antrieb des Getriebes 23 um jeden beliebigen Drehwinkel verdreht werden, wodurch eine stufenlose Einstellung der Sitzhöhe möglich ist. Mit Freigeben des Schwenkhebels 26 sorgt das Getriebe 23 durch seine Arretierfunktion dafür, daß die mit dem Schwenkhebel 26 vorgenommene Einstellung der Höhenposition des Sitzteils 10 unverändert beibehalten wird. Ist das mit dem Abtrieb des Getriebes 23 gekoppelte Verstellorgansystem zur Einstellung der Sitzhöhe des Sitzteils 10 mit einer ausreichend großen Selbsthemmung versehen, so könnte auf das Getriebe 23 verzichtet werden und das Innenteil 27 des Schrittschaltwerks 25 unmittelbar mit einem Verstellorgan des Verstellorgansystems gekoppelt werden. Zu einer zuverlässigen Sicherung der Einstellposition auch im Crashfall oder auf extrem schlechten Wegstrecken, wird jedoch bevorzugt das Getriebe 23 zwischen Schrittschaltwerk 25 und Verstellorgansystem angeordnet.

Die Endlage des Schwenkhebels 26 in der Betätigungseinheit 24 kann durch eine Langlochführung 34 fixiert werden, wie sie in Fig. 2 - 4 dargestellt ist. Eine solche Endlagenfixierung reduziert den Verschleiß an den Klemmkörpern 31 und an den Druckfedern 32 bei Auftreten von relativ großen Angriffskräften am Schwenkhebel 26. Die Langlochführung 34 weist ein im Schwenkhebel 26 bzw. im Außenteil 28 angeordnetes bogenförmiges Langloch 35 auf, das auf einem zur Schwenkachse des Schwenkhebels 26 konzentrischen Kreis angeordnet ist. In das Langloch 35 greift ein räumlich feststehend angeordneter Stift 36 hinein, der durch Anschlag an den abgerundeten Enden des Langlochs 35 die maximale Schwenkbewegung des Schwenkhebels 26 festlegt. Die bogenförmige Länge des Langlochs 35 ist so gewählt, daß der Stift 36 zur Anlage kommt, wenn die Druckfedern 32 gerade auf Blocklänge gestaucht sind. In der Nullage des Schwenkhebels 26 ist der Stift 36 im Langloch 35 mittig plaziert.

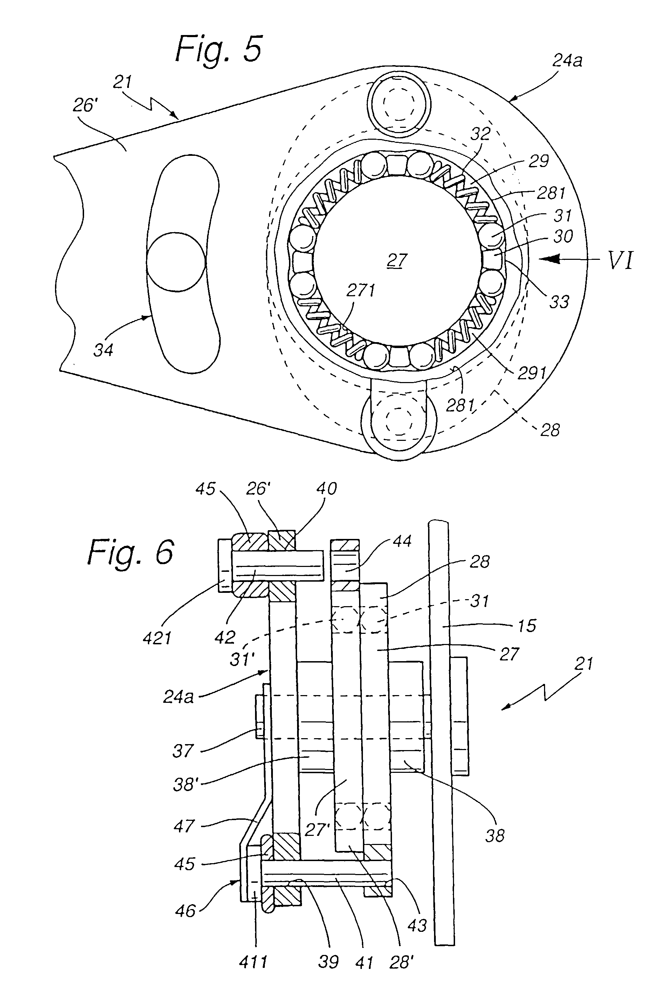

Die Verstellvorrichtung 21 zur Durchführung zweier Verstellfunktionen am Fahrzeugsitz weist für jede Verstellfunktion ein separates Getriebe 23 mit Freilauf und Hemmung auf, wie dies vorstehend bereits erwähnt worden ist und in Verbindung mit Fig. 13 und 14 noch nachfolgend im Detail beschrieben wird. In gleicher Weise wie die Verstellvorrichtung 20 hat auch die Verstellvorrichtung 21 eine in Fig. 5 und 6 dargestellte Betätigungseinheit 24a mit einem an der Außenseite der Rückenlehne 11 gut zugänglichen Schwenkhebel 26' zur manuellen Bedienung und hier entsprechend der Durchführung von zwei Verstellfunktionen mit zwei identisch ausgebildeten Schrittschaltwerken 25 und 25'. Die beiden Schrittschaltwerke 25,25' sind identisch dem vorstehend beschriebenen Schrittschaltwerk 25 gemäß Fig. 2 - 4 aufgebaut, so daß auf die Beschreibung für diese Fig. Bezug genommen wird und gleiche Bauteile mit gleichen Bezugszeichen versehen sind. In Abkehr von der Betätigungseinheit 24 in Fig. 2 - 4 4 ist bei der Betätigungseinheit 24a der Schwenkhebel 26' nicht einstückig mit den Außenteilen 28 der Schrittschaltwerke 25,25' sondern als separates Bauteil ausgeführt, der wahlweise mit einem der Außenteile 28 bzw. 28' der beiden Schrittschaltwerke 25,25' koppelbar ist. Entsprechend der Kopplung des Schwenkhebels 26' mit dem Schrittschaltwerk 25 oder dem Schrittschaltwerk 25' wird die eine Verstellfunktion, z.B. die Lehnenneigung, oder die andere Verstellfunktion, z.B. die Kopfstützenhöheneinstellung, vorgenommen. Nach Beendigung der Sitzeinstellung ist der Schwenkhebel 26' von den beiden Schrittschaltwerken 25,25' entkoppelt, und die vorgenommene Einstellung wird durch die Arretierfunktion des jeweils zwischen dem Schrittschaltwerk 25 bzw. 25' und dem zugeordneten Verstellorgansystem eingeschalteten Getriebes 23 zuverlässig arretiert.

Wie aus Fig. 6 hervorgeht, sind die beiden Schrittschaltwerke 25 und 25' mit ihrem Innenteil 27 und 27' und ihrem Außenteil 28 und 28' unmittelbar nebeneinander angeordnet, wobei die Innenteile 27 und 27' auf einem im Lehnenrahmen 15 gehaltenen Zapfen 37 drehbar angeordnet sind. Mit jedem Innenteil 27,27' ist ein Ritzel 38,38' drehfest verbunden, welches die Drehbewegung des Innenteils 27,27' entweder direkt auf das Verstellorgan des Verstellsystems (unter der Voraussetzung, daß dieses eine Selbsthemmung aufweist) oder bevorzugt zum Antrieb des Getriebes 23 überträgt.

Zur wahlweisen Kopplung des ebenfalls auf dem Zapfen 37 schwenkbar gelagerten Schwenkhebel 26' sind in diesem zwei Durchgangsbohrungen 39,40 vorgesehen, die auf einem zum Zapfen 37 koaxialen Lochkreis einander diametral gegenüberliegend angeordnet sind. In jeder Durchgangsbohrung 39,40 ist ein Mitnehmerstift 41 bzw. 42 axial verschieblich aufgenommen. Korrespondierend zu dem Mitnehmerstift 41,42 sind in jedem Außenteil 28 und 28' eine axiale Aufnahme 43,44 für jeweils einen Mitnehmerstift 41,42 vorgesehen. Bei den hier als Scheiben ausgebildeten Außenteilen 28,28' sind die Aufnahmen 43,44 jeweils durch eine axiale Bohrung in dem Außenteil 28 und 28' realisiert. Die Aufnahmen 43,44 sind so angeordnet, daß in der Nullage der Schrittschaltwerke 25,25' die Aufnahme 43 im Außenteil 28 mit dem Mitnehmerstift 41 und die Aufnahme 44 im Außenteil 28' mit dem Mitnehmerstift 42 fluchtet. Zwischen einem stirnseitigen Kopf 411,421 der Mitnehmerstifte 41,42 und der Oberfläche des Schwenkhebels 26 stützen sich jeweils federelastische Rückstellelemente 45, z.B. Gummipuffer ab, welche die Mitnehmerstifte 41,42 außer Eingriff mit den zugeordneten Aufnahmen 43,44 halten, also die Entriegelung zwischen Schwenkhebel dem 26' und den beiden Schrittschaltwerken 25,25' sicherstellen. Soll das Schtrittschaltwerk 25 mit dem Schwenkhebel 26' gekoppelt werden, so wird der Mitnehmerstift 41 unter Zusammenpressen des Rückstellelements 45 verschoben, so daß er in die Aufnahme 43 im Außenteil 28 des Schrittschaltwerks 25 formschlüssig eindringt. Danach wird ein Verriegelungsglied 46, daß hier als ein auf dem Zapfen 37 schwenkbar gelagertes gekröpftes Federblech 47 ausgeführt ist, über den Kopf 411 des Mitnehmerstifts 41 geschwenkt, so daß ein Rückstellen des Mitnehmerstifts 41 durch das Rückstellelement 45 verhindert ist. Der Schwenkhebel 26' ist mit dem Schriftschaltwerk 25 drehfest verbunden, wie dies im unteren Teil der Fig. 6 dargestellt ist, und durch Schwenken des Schwenkhebels 26' in der eingangs beschriebenen Weise wird über das Schrittschaltwerk 25 das Ritzel 38 gedreht. Nach Beendigung der Sitzeinstellung über das Schrittschaltwerk 25 wird das Federblech 47 wieder vom Mitnehmerstift 41 abgeschwenkt, und das Rückstellelement 45 sorgt durch Zurückschieben des Mitnehmerstifts 41 durch eine automatische Entriegelung. Wird in gleicher Weise durch Betätigen des Mitnehmerstifts 42 der Schwenkhebel 26' mit dem Schrittschaltwerk 25' gekoppelt, so kann mit dem Schwenkhebel 26' die andere Sitzeinstellung durchgeführt werden.

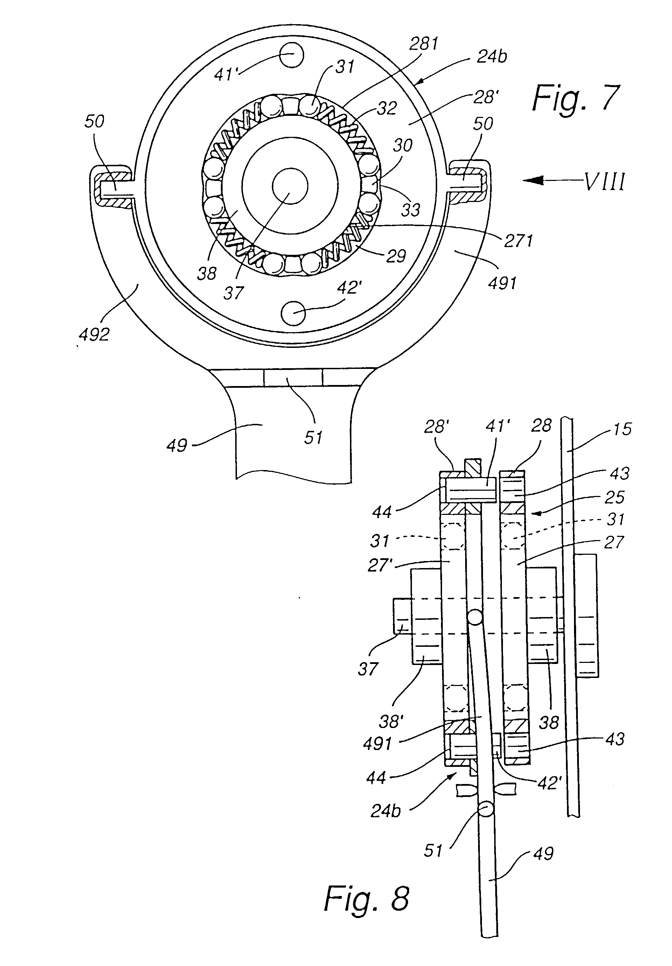

Die in Fig. 7 und 8 dargestellte Betätigungseinheit 24b als weiteres Ausführungsbeispiel unterscheidet sich von der vorstehend beschriebenen Betätigungseinheit 24a dadurch, daß der Schwenkhebel 26' zwischen den beiden Schrittschaltwerken 25 und 25' angeordnet und auf dem Zapfen 37 sowohl drehbar als auch axial verschieblich gehalten ist. Der Schwenkhebel 26' weist zwei einander diametral gegenüberliegende Mitnehmerstifte 41' und 42' auf, die fest im Schwenkhebel 26' angeordnet sind und auf beiden Stirnseiten des Schwenkhebels 26' axial vorstehen. In Zuordnung zu den Mitnehmerstiften 41' und 42' tragen jede der beiden Außenteile 28 und 28' der beiden Schrittschaltwerke 25 und 25' zwei diametral einander gegenüberliegende Aufnahmen 43 bzw. 44 zum formschlüssigen Einschieben der Mitnehmerstifte 41' und 42' bei der axialen Verschiebung des Schwenkhebels 26'. Im übrigen ist der Aufbau und die Wirkungsweise der Betätigungseinheit 24b identisch mit der vorstehend beschriebenen Betätigungseinheit 24a, so daß gleiche Bauelemente mit gleichen Bezugszeichen versehen sind.

Wie aus Fig. 7 und 8 ersichtlich ist, kann der Schwenkhebel 26' zweiteilig ausgeführt werden und aus einem Kupplungsring 48 und aus einem Gabelhebel 49 bestehen. Der Kupplungsring 48 trägt an seinem Umfang zwei diametral einander gegenüberliegende, jeweils radial vom Kupplungsring 48 wegstehende Zapfen 50, auf welchen der Gabelhebel 49 mit seinen den Kupplungsring 48 über etwa 180° umgreifenden beiden Gabelschenkeln 491,492 schwenkbar gehalten ist. Der Gabelhebel 49 kann in seiner Nullage um einen im Abstand von den Zapfen 50 angeordneten Schwenkpunkt 51 geschwenkt werden, so daß durch Querbewegung des Gabelhebels 49, und zwar quer zu seiner Schwenkbewegung zwecks Erzielung einer Verstellfunktion, der Kupplungsring 48 zu dem einen oder anderen Schrittschaltwerk 25 bzw. 25' hin verschoben wird und die Mitnehmerstifte 41',42' in die entsprechenden Aufnahmen 43 bzw. 44 zur drehfesten Mitnahmen der Außenteile 28 bzw. 28' eintauchen.

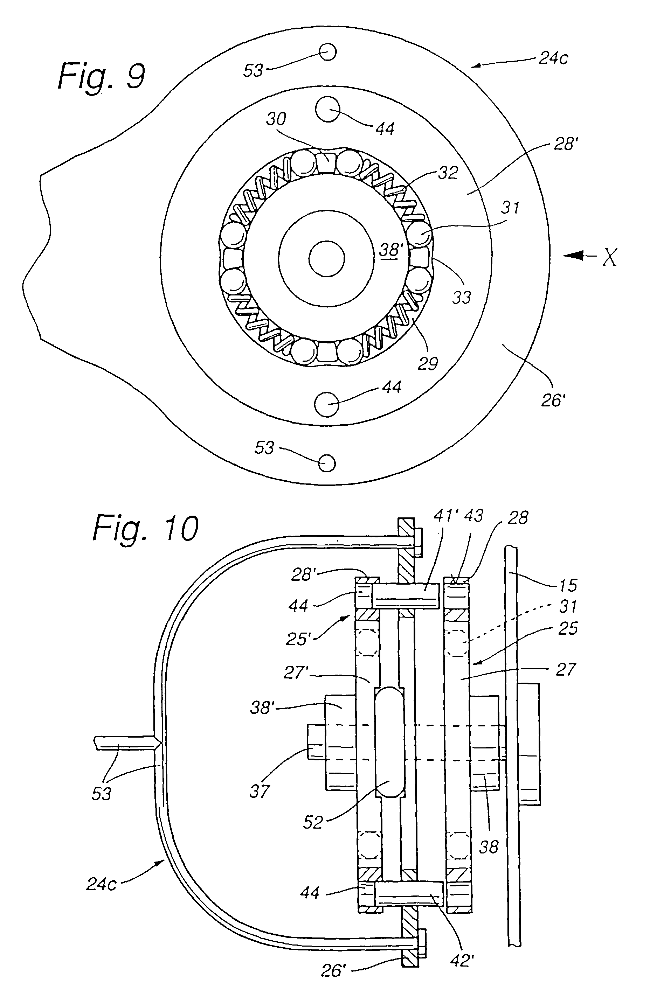

Bei der in Fig. 9 und 10 dargestellten Betätigungsvorrichtung 24c ist ebenso wie bei der Betätigungsvorrichtung 24b in Fig. 7 und 8 der Schwenkhebel 26' axial verschieblich auf dem Zapfen 37 zwischen den beiden Schrittschaltwerken 25 und 25' angeordnet. Der Schwenkhebel 26' weist wiederum zwei diametral gegenüberliegend angeordnete Mitnehmerstifte 41' und 42' auf, die feststehend auf beiden Stirnseiten des Schwenkhebels 26' axial vorstehen. Ein federelastisches Rückstellglied 52, das hier als Gummipuffer ausgebildet ist, hält den Schwenkhebel 26' über seine in die Aufnahmen 43 im Außenteil 28 des Schrittschaltwerks 25 eingreifenden Mitnehmerstifte 41',42' im ständigen Eingriff mit dem Schrittschaltwerk 25. Die Aufhebung der Verriegelung des Schwenkhebels 26' mit dem Schrittschaltwerk 25 und die Verriegelung des Schwenkhebels 26 mit dem Schrittschaltwerk 25' erfolgt über einen Seilzug 53, der an diametral gegenüberliegenden Stellen des Schwenkhebels 26' befestigt ist. Durch Aufbringen einer Zugkraft am Seilzug 53 wird der Schwenkhebel 26' entgegen der Kraft des Rückstellgliedes 52 axial auf dem Zapfen 37 verschoben, wobei die Mitnehmerstifte 41' und 42' aus den Aufnahmen 43 im Außenteil 28 herausgleiten und sich in die Aufnahmen 44 im Außenteil 28' des Schrittschaltwerks 25' einschieben. Im übrigen ist der Aufbau und die Wirkungsweise der Betätigungseinheit 24c identisch mit der zu Fig. 7 und 8 beschriebenen Betätigungseinheit 24b, so daß gleiche Bauteile mit gleichen Bezugszeichen versehen sind.

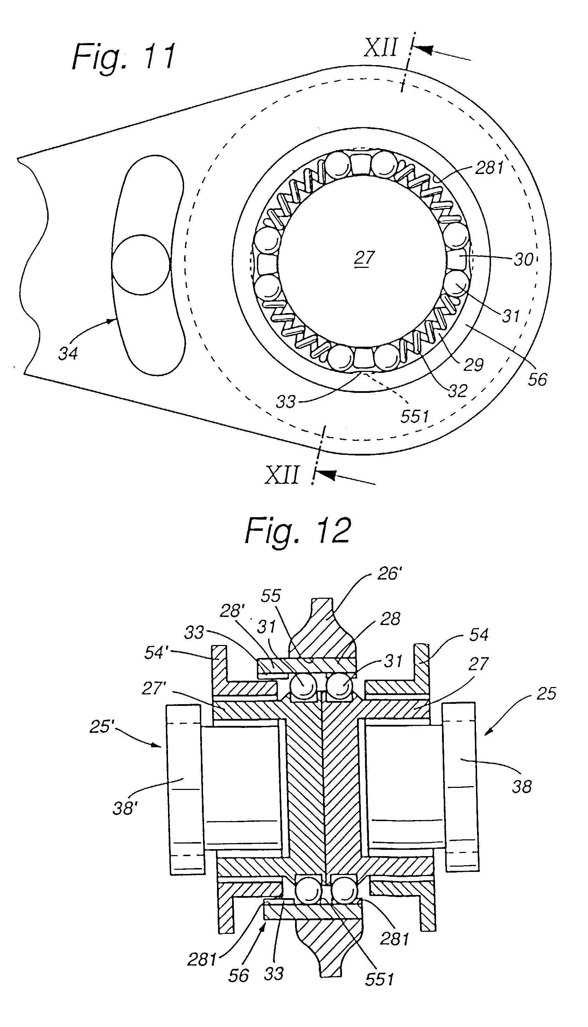

Bei der in Fig. 11 und 12 skizzierten Betätigungseinheit 24d sind die beiden Schaltwerke 25,25' unmittelbar nebeneinander angeordnet und die jeweiligen Innenteile 27,27' mit daran befestigten Ritzeln 38,38' drehbar in lehnenrahmenseitigen Buchsen 54 und 54' gehalten. Die beiden Außenteile 28 und 28' der beiden Schaltwerke 25 und 25' sind in zueinander kongruenter Ausrichtung zusammen mit einem mittigen Zwischenring 55 zu einer Schaltbuchse 56 vereinigt, die drehfest mit dem Schwenkhebel 26' verbunden ist. Der Zwischenring 55 unterscheidet sich in seiner Ausbildung von den Außenteilen 28 und 28' dadurch, daß an seiner inneren Ringfläche 551, anders als an den Innenflächen 281 der Außenteile 28 bzw. 28', die Axialrippen 33 fehlen. Dadurch können die Klemmkörper 31, die hier als Kugeln ausgebildet sind, im Bereich des Zwischenrings 55 sich nicht zwischen der Ringfläche 551 des Zwischenrings 55 und der Außenfläche 271 der beiden Innenteile 27,27' verklemmen, und zwischen dem Zwischenring 55 und den Innenteilen 27,27' herrscht stets Freilauf. Die Schaltbuchse 56 ist axial verschieblich zu den Innenteilen 27,27' angeordnet und derart ausgebildet, daß in jeder axialen Verschiebestellung der Schaltbuchse 56 jeweils der Zwischenring 55 die Klemmkörper 31 eines Schaltwerks 25 bzw. 25' übergreift. Dadurch ist stets ein Außenteil 28 bzw. 28' mit dem Innenteil 27 bzw. 27' des gleichen Schaltwerks 25 bzw. 25' über die Klemmkörper 31 verkeilt, während der Zwischenring 55 über den Klemmkörpern 31 des anderen Schaltgetriebes 25' bzw. 25 steht und sich über die Klemmkörper 31, die hier als Kugellager wirken, auf dem Innenteil 27' bzw. 27 abrollt. Damit ist der Schwenkhebel 26' je nach Verschiebestellung der Schaltbuchse 56 mit einem der beiden Schaltwerke 25 bzw. 25' gekoppelt, in der Darstellung in Fig. 12 mit dem Schrittschaltwerk 25. Zur Kopplung des Schwenkhebels 26' mit dem Schrittschaltwerk 25' ist die Schaltbuchse 56 in Fig. 12 nach rechts zu verschieben. Die Schaltbuchse 56 ist einstückig und entsprechend den beiden Außenteilen 28,28' mit durchgehenden Axialrippen 33 ausgebildet, wobei die Ringfläche 551 des Zwischenrings 55 durch mittigen Freistich der Axialrippen 33 gewonnen wird. Die Wirkungsweise der Betätigungseinheit 24d ist im übrigen wie die der vorstehend beschriebenen Betätigungseinheiten 24a - 24c, so daß insoweit auf die vorstehenden Ausführungen verwiesen wird.

In Fig. 13 und 14 sind verschiedene Ausführungsbeispiele des bereits angesprochenen Getriebes 23 mit Freilauf und Hemmung dargestellt, mit welchen eine Verstellung und Arretierung der Sitzeinstellung möglich ist. Das Getriebe 23 ist bei Kraftfluß vom Antrieb zum Abtrieb in entgegengesetzten Drehrichtungen frei drehbar, während es bei Umkehrung des Kraftflusses, also bei Kraftfluß vom Abtrieb zum Antrieb, sperrt und damit eine Änderung der vorgenommenen Sitzeinstellung zuverlässig verhindert.

Das in Fig. 13 dargestellte Getriebe 23 weist eine abtriebsseitige, mit einem Verstellorgan am Fahrzeugsitz drehfest verbundene Innenwelle 60 und ein feststehendes Gehäuse 61 auf, das mit einer zylindrischen Gehäuseinnenwand 611 unter Belassung eines Ringspalts 62 zu dem Außenmantel 601 der Innenwelle 60 letztere konzentrisch umschließt. Die Innenwelle 60 trägt vier um gleiche Umfangswinkel zueinander versetzt angeordnete, in den Ringspalt 62 radial hineinragende Radialvorsprünge 63, die mit jeweils einer in Umfangsrichtung verlaufenden Durchgangsbohrung 64 versehen sind. Durch die vier Radialvorsprünge 63 werden im Ringspalt 62 insgesamt vier Ringspaltabschnitte 621 gebildet, in welche jeweils ein antriebsseitiger Mitnehmer 65 axial hineinragt. In Verbindung mit den in Fig. 2 - 12 beschriebenen Betätigungseinheiten 24 und 24a - 24d sind die vier Mitnehmer 65 jeweils fest mit dem Innenteil 27 bzw. 27' der Schrittschaltwerke 25 bzw. 25' verbunden. Im Außenmantel 601 der Innenwelle 60 sind jeweils anschließend an die Radialflanken 631 der Radialvorsprünge 63 Vertiefungen 66 eingebracht, in welchen jeweils ein Klemmkörper 67 einliegt, der im Ausführungsbeispiel der Fig. 13 als Walze oder Kugel 69 ausgebildet ist. Die Vertiefungen 66 sind so ausgebildet, daß in ihnen der Klemmkörper 67 sich zwischen der Innenwand 611 des Gehäuses 61 und dem Grund der Vertiefungen 66 abrollen kann. Zu der von den Radialflanken 631 der Radialvorsprünge 63 abgekehrten Seite hin nehmen die Vertiefungen 66 in ihrer radialen Tiefe ab und gehen schließlich stetig in den Außenmantel 601 der Innewelle 60 über. Bei den vier vorhandenen Radialvorsprünge 63 sind damit im Außenmantel 601 der Innenwelle 60 insgesamt acht Vertiefungen 66 vorhanden, in welchen insgesamt acht Klemmkörper 67 einliegen. Die Anzahl der Radialvorsprünge 63 und damit die Anzahl der Mitnehmer 65 und der Vertiefungen 66 und Klemmkörper 67 ist frei wählbar. In den Durchgangsbohrungen 64 der Radialvorsprünge 63 liegen jeweils Schraubendruckfedern 68 ein, welche sich jeweils an den beiden Klemmkörpern 67 abstützen, die in den beidseitig der Radialvorsprünge 63 sich anschließenden Vertiefungen 66 einliegen, und diese in den Vertiefungen 66 soweit verschieben, daß die Klemmkörper 67 sich zwischen der Innenwelle 60 und dem Gehäuse 61 verklemmen und damit diese beiden Teile drehfest miteinander verbinden. Die insgesamt vier antriebsseitigen Mitnehmer 65 ragen in den Raum zwischen den beiden innerhalb eines Ringspaltabschnittes 621 liegenden Klemmkörpern 67 hinein und sind so dimensioniert, daß sie in Umfangsrichtung einen nur geringen Abstand zu den durch die Schraubendruckfedern 68 verkeilten Klemmkörpern 67 einhalten.

Wird von dem Fahrzeugsitz ein Bewegungsimpuls auf die Innenwelle 60 eingeleitet, so führt eine geringfügige Drehbewegung der Innenwelle 60 zu einem weiteren Verkeilen der Klemmkörper 67 am Gehäuse 61 und damit zur erhöhter Arretierung. Damit ist ein Verstellen der Sitzposition bei Crash oder durch Schwingungen auf extrem schlechten Wegstrecken zuverlässig ausgeschlossen. Ein Verstellen des Getriebes 23 kann nur über die Mitnehmer 65 erfolgen. Beim Drehen der Mitnehmer 65 drücken diese die Klemmkörper 67 gegen die Kraft der Schraubendruckfedern 68 aus deren Sperrposition heraus bis zur Anlage an der einen Radialflanke 631 der Radialvorsprünge 63. Über diese Radialvorsprünge 63 wird nun die Innenwelle 60 um den gewünschten Verstellweg mitgenommen. Dieser Verstellvorgang erfolgt in beiden Drehrichtungen der Mitnehmer 65 in gleicher Weise. Erfolgt keine Verstellbewegung der Mitnehmer 65, so werden die Klemmkörper 67 von den Schraubendruckfedern 68 wieder in ihre Klemmposition eingeschoben und arretieren die Innenwelle 60 in der neuen Einstellposition.

Bei dem in Fig. 14 ausschnittweise dargestellten Getriebe 23 ist die Innenwand 611 des feststehenden Gehäuses 61 mit einer flachen, feinstufigen Innenverzahnung 71 versehen und die Klemmkörper 67 als Fünfeckprismen 72 ausgebildt. Die Vertiefungen 66 sind als asymmetrische, im Querschnitt etwa sägezahnförmige Längsnuten 73 ausgeführt, deren größte Tiefe am Fuße der Radialschultern 631 der Radialvorsprünge 63 liegt. Die Innenverzahnung 71 und die dieser zugekehrten Prismenfläche 721 der auf dem Nutgrund der Längsnuten 73 verschiebbaren Fünfeckprismen 72 sind so aufeinander abgestimmt, daß die Fünfeckprismen 72 von den Schraubendruckfedern 68 formschlüssig in die Innenverzahnung 71 eingeschoben werden. Die Funktion des Getriebes 23 ist identisch mit dem zu Fig. 13 beschriebenen Getriebe 23 mit dem Unterschied, daß das Verriegeln nicht mehr stufenlos, sondern in feinstufigen Schritten entsprechend der Ausführung der Innenverzahnung 71 erfolgt, wodurch ein besserer Formschluß und ein sicheres Verkeilen erzielt wird.

## Patentansprüche

1. Verstellvorrichtung (20) zur Durchführung mindestens einer Verstellfunktion, insbesondere zur Verstellung eines Kraftfahrzeugsitzes, mit mindestens einem Antrieb und Abtrieb aufweisenden Getriebe (23) zur Übertragung einer antriebsseitigen Drehbewegung in eine abtriebsseitige Verstellbewegung, das mit Freilauf und Hemmung derart ausgestattet ist, daß bei Kraftfluß vom Antrieb zum Abtrieb das Getriebe (23) in entgegengesetzten Drehrichtungen frei drehbar ist und bei Umkehrung des Kraftflusses sperrt, und mit einer Betätigungseinheit (24) zur Erzeugung einer Drehbewegung in dem einen oder anderen Drehsinn am Antrieb,
wobei das Getriebe (23) eine abtriebsseitige, mit einem Verstellorgan drehfest verbundene Innenwelle (60) und ein feststehendes Gehäuse (61) aufweist, das mit einer zylindrischen Gehäuseinnenwand (611) die Innenwelle (60) unter Belassung eines Ringspalts (62) zu deren Außenmantel (601) konzentrisch umschließt,
wobei die Innenwelle (60) um vorzugsweise gleiche Umfangswinkel zueinander versetzt angeordnete, in den Ringspalt (62) radial hineinragende Radialvorsprünge (63) trägt,
wobei im Außenmantel (601) eine doppelte Anzahl von Vertiefungen (66) eingebracht sind, die in Umfangsrichtung gesehen auf einer Seite jeweils von einer Radialschulter (631) der Radialvorsprünge (63) begrenzt sind und deren Tiefe zu der von der Radialschulter (631) abgekehrten Seite hin abnimmt,
wobei in den Vertiefungen (66) jeweils ein Klemmkörper (67) einliegt, der am Boden der Vertiefung (66) und an der Gehäuseinnenwand (611) anliegt und mittels eines federelastischen Elements (68) zu der von der Radialschulter (631) abgekehrten Seite der Vertiefung (66) hin verschoben wird, und
wobei in den Ringspalt (62) eine der Anzahl der Radialvorsprünge (63) entsprechende Zahl von antriebsseitigen Mitnehmern (65) hineinragt, die jeweils zwischen zwei einander zugekehrten Klemmkörpern (67) plaziert sind,
dadurch gekennzeichnet, daß die Gehäuseinnenwand (611) mit einer flachen, feinstufigen Innenverzahnung (71) versehen ist, daß die Klemmkörper (67) als Prismen (72) ausgebildet sind und daß die Innenverzahnung (71) an der Gehäuseinnenwand (611) und die dieser zugekehrte Prismenfläche (721) der Prismen (72) so aufeinander abgestimmt sind, daß die Prismen (72) von ihren federelastischen Elementen (68) in die Innenverzahnung (71) eingeschoben werden.

2. Verstellvorrichtung nach Anspruch 1, dadurch gekennzeichnet, daß die Prismen Fünfeckprismen (72) sind.

3. Verstellvorrichtung nach Anspruch 1 oder 2, dadurch gekennzeichnet, daß die Vertiefungen (66) als asymmetrische, im Querschnitt etwa sägezahnförmige Längsnuten (63) ausgebildet sind, deren größte Tiefe am Fuße der Radialschultern (631) der Radialvorsprünge (63) liegt.

4. Verstellvorrichtung nach einem der Ansprüche 1 bis 3, dadurch gekennzeichnet, daß die Prismen (72) auf dem Nutgrund der Längsnuten (73) in Umfangsrichtung verschiebbar sind.

5. Verstellvorrichtung nach einem der Ansprüche 1 bis 4, dadurch gekennzeichnet, daß die federelastischen Elemente für jeweils zwei auf in Umfangsrichtung voneinander abgekehrten Seiten der Radialvorsprünge (63) liegende Klemmkörper (67) jeweils von einer Schraubendruckfeder (68) gebildet ist, die in einer in Umfangsrichtung sich erstreckenden Durchgangsbohrung (64) in den Radialvorsprüngen (63) einliegt und sich mit ihren Stirnseiten an den beiden Klemmkörpern (67) abstützt.

## Claims

1. Adjusting device (20) for performing at least one adjusting function, particularly for adjusting a vehicle seat, having at least one transmission (23) having a driving side and a driven side for transforming a drive-side rotary movement into a driven-side adjusting movement and which is equipped with free running and inhibition in such a way that in the case of a flux of force from the drive side to the driven side the transmission (23) is freely rotatable in opposite rotation directions and locks in the case of a reversal of the flux of force, and having an actuating unit (24) for producing a rotary movement in one or other rotation direction on the drive,
in which the transmission (23) has an inner shaft (60) on the driven side and connected in non-rotary manner to an adjusting member and a fixed casing (61), which concentrically surrounds with a cylindrical casing inner wall (611) the inner shaft (60), whilst leaving an annular clearance (62) to its outer jacket (601),
in which the inner shaft (60) carries radial projections projecting radially into the annular clearance (62) and mutually offset by preferably the same circumferential angles,
in which in the outer jacket (61) is provided a double number of depressions (66) which, considered in the circumferential direction, are bounded on one side by in each case a radial shoulder (631) of the radial projections (63) and whose depth decreases to the side remote from the radial shoulder (631),
in which in each of the depressions (66) is placed a clamping body (67), which engages on the bottom of the depressions (66) and on the casing inner wall (611) and by means of a springy element (68) is moved to the side of the depression (66) remote from the radial shoulder (631) and
in which into the annular clearance (62) projects a number of drive-side drivers (65) corresponding to the number of radial projections (63) and which are in each case positioned between two facing clamping bodies (67),
characterized in that the casing inner wall (611) is provided with flat, fine-step inner teeth (71), that the clamping bodies (67) are constructed as prisms (72) and that the inner teeth (71) on the casing inner wall (611) and the prism surface (721) of the prisms facing the same are so matched to one another that the prisms (72) are inserted by their springy elements (68) into the inner teeth (71).

2. Adjusting device according to claim 1, characterized in that the prisms are pentagonal prisms (72).

3. Adjusting device according to claim 1 or 2, characterized in that the depressions (66) are constructed as asymmetrical, cross-sectionally approximately sawtooth-shaped longitudinal grooves (63), whose maximum depth is at the foot of the radial shoulders (631) of the radial projections (63).

4. Adjusting device according to one of the claims 1 to 3, characterized in that the prisms (72) are circumferentially displaceable on the base of the longitudinal grooves (73).

5. Adjusting device according to one of the claims 1 to 4, characterized in that the springy elements are in each case formed by a helical compression spring (68) for clamping bodies (67) in each case positioned on circumferentially remote sides of the radial projections (63), each of said springs being located in a circumferentially extending through hole (64) in the radial projections (63) and are supported with their front ends on the two clamping bodies (67).

## Revendications

1. Dispositif de réglage (20) destiné à réaliser au moins une fonction de réglage, en particulier le réglage d'un siège de véhicule automobile, comprenant au moins un organe de commande (23) entraînement/réglage pour la conversion d'un mouvement de rotation entrant en un mouvement de réglage sortant, organe de commande présentant une course libre et une butée de façon que pour un flux moteur arrivant à l'entrée d'entraînement vers la sortie de réglage, l'organe de transmission (23) tourne librement dans des sens de rotation opposés et qu'il se bloque pour une inversion du flux moteur, et comprenant une unité d'actionnement (24) destinée à produire un mouvement de rotation au niveau de l'entrée d'entraînement dans l'un ou l'autre sens de rotation,
dans lequel l'organe de commande (23) présente du côté de sa sortie un arbre intérieur (60) rigide en torsion relié à rotation à un organe de réglage et présente un carter (61) fixe, qui entoure de manière concentrique l'arbre intérieur (60) par une paroi intérieure de carter cylindrique (611) en ménageant une fente annulaire (62) vers l'enveloppe extérieure (601) de l'arbre,
dans lequel l'arbre intérieur (60) comporte des saillies (63) radiales, décalées les unes par rapport aux autres selon des angles inscrits de préférence identiques et s'engageant radialement dans la fente annulaire (62),
dans lequel des évidements (66) sont ménagés en nombre double dans l'enveloppe extérieure (601) qui, vus dans le sens circonférentiel, sont chacun limités d'un côté par un épaulement radial (631) des saillies radiales (63), et dont la profondeur diminue vers le côté opposé à l'épaulement radial (631),
dans lequel chaque évidement (66) présente un élément de pincement (67) venant en contact avec le fond de l'évidement (66) et avec la paroi intérieure du carter (611) et qu'on déplace à l'aide d'un élément (68) élastique à ressort en direction du côté de l'évidement (66) opposé à l'épaulement radial (631), et
dans lequel des doigts d'entraînement (65) correspondant en nombre à celui des saillies radiales (63) s'engagent chacun dans une fente annulaire (62), doigts placés chacun entre deux éléments de pincement (67) disposés en regard,
caractérisé en ce que la paroi interne (611) du carter présente une denture intérieure (71) plate à échelons faibles, en ce que les éléments de pincement (67) sont conformés en prismes (72) et en ce que la denture intérieure (71) au niveau de la paroi intérieure (611) du carter et les surfaces (721) des prismes en regard de celle-ci sont prévues les unes par rapport aux autres de façon que les prismes (72) soient coulissés dans la denture intérieure (71) par leurs éléments (68) élastiques à ressort.

2. Dispositif de réglage selon la revendication 1, caractérisé en ce que les prismes sont des prismes pentagonaux (72).

3. Dispositif de réglage selon la revendication 1 ou 2, caractérisé en ce que les évidements (66) sont conformés en rainures longitudinales (63) asymétriques à section sensiblement en dent de scie, dont la plus grande profondeur se trouve à la base des épaulements radiaux (631) des saillies radiales (63).

4. Dispositif de réglage selon l'une quelconque des revendications 1 à 3, caractérisé en ce que les prismes (72) dont déplaçables en coulissement sur le fond des rainures longitudinales (73) dans le sens circonférentiel.

5. Dispositif de réglage selon l'une quelconque des revendications 1 à 4, caractérisé en ce que les éléments élastiques à ressort sont composés chacun d'un ressort de pression hélicoïdal (68) à chaque fois pour deux éléments de pincement (67) situés sur les parois des saillies radiales (623) opposées les unes aux autres dans le sens circonférentiel, ressort logé dans un perçage traversant (64) circonférentiel ménagé dans les saillies radiales (63) et prenant appui par ses faces frontales sur les deux éléments de pincement (67).
